(19) Europäisches Patentamt
European Patent Office
Office européen des brevets

(11) **EP 0 719 438 B1**

(12) **FASCICULE DE BREVET EUROPEEN**

(45) Date de publication et mention
de la délivrance du brevet:
**13.01.1999 Bulletin 1999/02**

(21) Numéro de dépôt: **95925045.7**

(22) Date de dépôt: **11.07.1995**

(51) Int Cl.⁶: **G07C 9/00**, G07F 7/08

(86) Numéro de dépôt international:
**PCT/FR95/00935**

(87) Numéro de publication internationale:
**WO 96/02899 (01.02.1996 Gazette 1996/06)**

(54) **SYSTEME DE CONTROLE D'ACCES LIMITES A DES PLAGES HORAIRES AUTORISEES ET RENOUVELABLES AU MOYEN D'UN SUPPORT DE MEMORISATION PORTABLE**

ZUGANGSKONTROLLSYSTEM MIT AUTORISIERTEN UND MITTELS EINES TRAGBAREN SPEICHERTRÄGERS ERNEUERBAREN STUNDENBEREICHEN

ACCESS CONTROL SYSTEM FOR RESTRICTING ACCESS TO AUTHORISED HOURS AND RENEWING IT USING A PORTABLE STORAGE MEDIUM

(84) Etats contractants désignés:
**AT BE CH DE ES FR GB IT LI NL SE**

(30) Priorité: **13.07.1994 FR 9408770**

(43) Date de publication de la demande:
**03.07.1996 Bulletin 1996/27**

(73) Titulaire: **LA POSTE**
**F-92777 Boulogne Billancourt Cédex (FR)**

(72) Inventeurs:
• **GIRAULT, Marc**
**F-14000 Caen (FR)**

• **REITTER, Renaud**
**F-14000 Caen (FR)**
• **REVILLET, Marie-Josèphe**
**F-14790 Verson (FR)**

(74) Mandataire: **Schmit, Christian Norbert Marie**
**Cabinet BALLOT-SCHMIT,**
**16, avenue du Pont Royal**
**94230 Cachan (FR)**

(56) Documents cités:
| | |
|---|---|
| EP-A- 0 030 381 | EP-A- 0 122 244 |
| EP-A- 0 253 722 | EP-A- 0 299 826 |
| EP-A- 0 422 757 | WO-A-91/18169 |
| US-A- 4 453 074 | US-A- 4 720 860 |

## Description

L'invention concerne un système de contrôle d'accès limités à des plages horaires autorisées et renouvelables au moyen d'un support de mémorisation.

L'invention s'applique tout particulièrement au domaine du contrôle d'accès à des bâtiments, à des systèmes informatiques ou à toutes sortes d'objets dont l'ouverture ou l'utilisation doit être contrôlée.

La manière la plus connue de verrouiller un accès qu'il s'agisse d'un bâtiment ou de tout autre objet consiste à placer une serrure mécanique et à délivrer une clé aux personnes ayant une autorisation d'accès. Bien entendu, l'inconvénient de cette méthode réside dans le fait que les clés mécaniques sont parfaitement duplicables. Une telle clé peut être également volée et utilisée par le voleur, la seule solution possible étant alors de changer le barillet de la serrure.

Une deuxième méthode, mais électronique celle-ci consiste à prévoir une serrure avec mot de passe. Seuls les utilisateurs connaissant le mot de passe sont habilités à accéder au bâtiment protégé.

Malheureusement, cette solution n'est pas infaillible. En effet, lorsqu'un utilisateur entre son mot de passe en le tapant sur un clavier, il est tout à fait possible à ce moment-là de concevoir une électronique apte à lire ce mot de passe au passage et, par conséquent, à permettre à une personne mal intentionnée de le réutiliser.

Il est connu, par ailleurs de protéger l'accès à des programmes d'ordinateurs au moyen de mots de passe. Cette protection à l'inconvénient cité précédemment.

On connaît également une procédure d'authentification dénommée Kerberos qui permet de protéger l'accès à un réseau informatique ouvert. On trouvera une description de cette procédure dans la publication du 30 mars 1988 du MIT, intitulée "An Authentification Service for Open Network Systems".

Cette procédure permet d'identifier un "client", c'est-à-dire un utilisateur et de lui permettre un accès à un serveur (à un service, une application, un programme) en lui délivrant pour cela un ticket électronique et plus précisément une information cryptée au moyen d'une clé. Ce ticket est établi par le serveur au "client". D'autre part, le ticket n'est pas suffisant pour obtenir l'autorisation d'accès, une deuxième information cryptée est également utilisée dans la procédure en combinaison avec l'utilisation du ticket.

Une telle procédure est lourde et demande des moyens de calcul relativement puissants, ce qui n'est pas une contrainte dans l'application qui est donnée, mais qui peut le devenir pour toute autre application, applications pour lesquelles la place mémoire et les moyens de calculs ne sont pas aussi importants que ceux d'un serveur.

D'autre part, la deuxième information cryptée est établie pour un accès entre un client et un serveur et ne peut être utilisée qu'une fois pour cette liaison.

On pourra se reporter en outre à l'état de la technique le plus proche constitué par le document EP-A-0 122 244.

La présente invention a pour but de remédier à ces inconvénients.

D'autre part, selon l'invention, il n'est plus nécessaire d'avoir à constituer une liste noire de moyens d'accès perdus ou volés ou dupliqués et d'avoir à gérer de telles listes car, comme on le verra dans la suite de la description, un support volé ou perdu ne pourra donner droit à un accès en dehors de la plage horaire autorisée si celle-ci n'est pas renouvelée. L'inscription de ce support sur une liste noire sera d'autant plus inutile que la durée d'autorisation d'accès sera courte.

Conformément à l'invention, le contrôle d'accès est réalisé non pas par des moyens mécaniques mais par des moyens logiques faisant intervenir une signature électronique de données relatives à une période prédéterminée d'autorisation d'accès limitant la validité d'utilisation du support dans lequel elle est mémorisée. En effet selon l'invention, la signature est mémorisée dans le support de mémorisation portable ainsi que selon l'algorithme utilisé, la donnée afin de permettre des accès à tous les équipements comportant le système de protection conforme à l'invention.

La présente invention a plus particulièrement pour objet un système de contrôle d'accès selon la revendication 1.

Le terme signature électronique doit être entendu ici au sens large. Il peut s'agir d'une signature électronique obtenue à l'aide de tout mécanisme cryptographique connu, à savoir des mécanismes de chiffrement ou d'authentification.

De préférence la donnée DH relative à la période prédéterminée de validité comporte une information de date d'utilisation et une plage horaire d'utilisation.

Selon un mode de réalisation, plusieurs signatures Sj sont calculées et enregistrées sur les supports des utilisateurs par les moyens d'élaboration des clés (S), pour une même donnée DH, ces signatures étant obtenues à partir d'une même clé secrète K, et d'une fonction de production f telle que $SJ = f(K, DH, aj)$, les paramètres aj étant prédéterminés et enregistrés dans les serrures électroniques. Ainsi selon ce mode de réalisation, on limite le nombre d'accès que peut faire l'utilisateur dans la période considérée. Celui-ci aura autant de droits d'accès que de signatures calculées et enregistrées sur son support pour la période d'autorisation considérée. Une signature est nécessaire à chaque accès.

Selon un mode de réalisation, la signature est obtenue au moyen d'un algorithme de production à clé secrète.

Selon un autre mode de réalisation, la signature peut être obtenue au moyen d'un algorithme de production à clé publique.

Selon l'invention, la signature sera obtenue préférentiellement avec un algorithme à clé publique dans le cas d'application de type usage public, c'est-à-dire dans le cas où la vérification de la signature va se faire à partir de moyens placés dans un environnement public.

Selon un autre mode de réalisation, la clé utilisée pour élaborer les signatures est la même pour toutes les signatures chargées dans les supports et renouvelées.

Selon une autre caractéristique de l'invention, on associe à cette clé K une donnée Z distincte selon les zones géographiques ou logiques d'utilisation afin de pouvoir distinguer ces zones d'utilisation.

Selon un autre mode de réalisation, on utilise des clés différentes pour élaborer les signatures chargées périodiquement, une clé étant choisie par zone géographique ou logique déterminée.

Selon une autre caractéristique de l'invention, on pourra utiliser une clé diversifiée Kc produite à partir d'une fonction de diversification de type connu.

Selon une autre caractéristique de l'invention, on divise la plage horaire de validité déterminée en un nombre donné de plages horaires consécutives et, on élabore une signature Si pour chacune de ces plages.

L'invention sera mieux comprise à l'aide de la description qui est donnée à titre indicatif et non limitatif et en regard des dessins sur lesquels :

- la figure 1 représente le schéma de principe d'un système objet de l'invention,
- la figure 2 représente le schéma de réalisation pratique des moyens de contrôle des clés électroniques selon l'invention,
- la figure 3 représente le schéma de réalisation pratique d'un support de mémorisation selon l'invention.

Dans toute la suite de la description on entend par entité signataire ou entité autorisée les moyens d'élaboration des clés électroniques, c'est-à-dire des couples S, DH (signatures électroniques et données), ces moyens permettant en outre le chargement de ces signatures dans les supports de mémorisation. On entend par serrure électronique les moyens de contrôle des données lues dans les supports de mémorisation.

L'entité signataire est selon l'invention apte à produire une signature électronique S à partir d'une fonction de production f et d'une clé K secrète.

La signature électronique d'une donnée DH par l'entité signataire peut donc s'écrire S = f (K, DH).

Afin que la signature de l'entité signataire puisse être vérifiée par chacune des serrures électroniques susceptibles de fournir l'accès, ces serrures disposent de moyens cryptographiques adéquats. Ces moyens se décomposent en un algorithme de vérification f' et une clé de vérification K' qui selon que l'algorithme de signature est à clé secrète ou à clé publique est égale à la clé secrète ou publique de l'entité signataire. Dans le premier cas on a donc K = K', dans le second cas il sera impossible connaissant K' d'en déduire K.

Selon les applications prévues les serrures électroniques seront placées, soit dans un environnement public, soit dans un environnement privé. Dans les cas où les serrures électroniques sont placées dans un environnement public, on utilisera de préférence un algorithme à clé publique de sorte que ces serrures électroniques ne contiennent aucune information secrète et qu'il n'y ait pas d'intérêt à en lire frauduleusement le contenu. Ainsi, on augmente la sécurité du système et on décourage donc le vandalisme en le rendant sans objet.

Ainsi selon l'invention, le support de mémorisation a alors une fonction de clé électronique apte à ouvrir toutes les serrures électroniques implantées sur tout un territoire ou sur une zone particulière. Selon l'invention, la fonction clé électronique est obtenue à partir d'une donnée relative à une période prédéterminée d'autorisation d'accès limitant la validité du support. Cette période se trouve sous forme par exemple d'une date et heure de début de plage horaire et date et heure de fin de plage horaire que l'on note dans la suite DH. Il peut s'agir également d'une date et d'une heure de fin d'autorisation. Lors du contrôle d'accès, la serrure électronique qui est avantageusement dotée d'une horloge interne vérifie que l'information date/heure courante se trouve bien à l'intérieur de la plage puis, vérifie la signature à l'aide de la clé de vérification (secrète ou publique selon le cas) dont elle dispose. Si les deux vérifications sont satisfaites la serrure envoie un signal d'autorisation d'accès A.

A titre d'exemple, dans le cas où un algorithme à clé secrète est utilisé, la serrure électronique lit la plage DH enregistrée dans le support de mémorisation, lit à partir de son horloge interne l'information date et heure courante et vérifie que cette information se trouve dans la plage lue dans le support puis, calcule une signature S' = f (K, DH). La serrure va lire également la signature qui a été mémorisée dans le support et vérifie que la signature calculée est égale ou non à la signature lue.

Dans le cas où l'on utilise un algorithme à clé publique, alors la serrure électronique lit la donnée relative à la plage horaire DH, lit la date et heure donnée par son horloge interne et vérifie que cette date et heure courantes se trouvent bien dans la plage lue dans le support de mémorisation. La serrure électronique va également lire la signature S mémorisée dans le support et vérifie à l'aide de la fonction de vérification f' et de la clé publique K' associée à K que cette signature S est bien la signature de la donnée DH ce qui peut s'exprimer sous la forme :

$$f' (K', DH, S) = \text{"OK"},$$

l'information "OK" correspondra en pratique à 1 bit à 1 ou à 0 selon la convention adoptée.

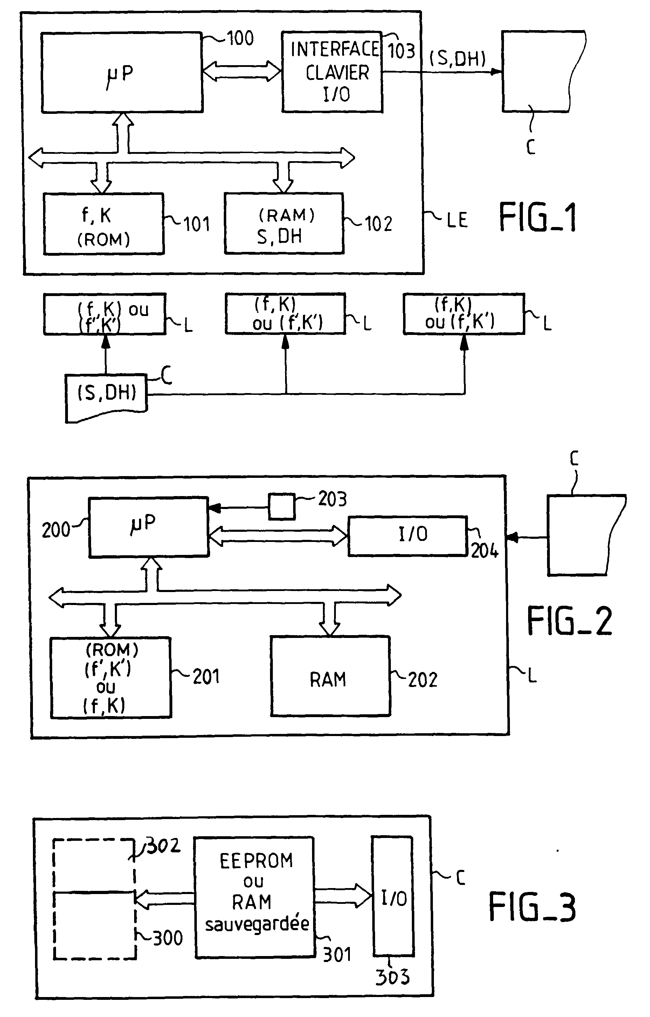

La description qui va suivre va maintenant détailler des modes de réalisation pratiques. On pourra se reporter aux figures 1 à 3 pour mieux comprendre.

Comme cela a été précisé, le système selon l'invention permet d'éviter d'avoir à tenir des listes noires et d'avoir à gérer de telles listes à chaque demande d'accès à des ensembles tels que des bâtiments, ou des systèmes informatiques, ou à toutes autres sortes d'objets comme cela doit être fait avec les techniques de l'art antérieur.

Ainsi pour atteindre ce but, l'invention substitue aux moyens d'accès mécaniques traditionnels associés à une clé mécanique un moyen logique résidant en une signature électronique calculée par une entité autorisée ayant reçu pour cela une clé K secrète.

L'invention consiste donc en outre à charger une signature électronique dans chaque support. La donnée signée par cette signature électronique comporte une donnée relative à une période prédéterminée de validité d'utilisation. Ainsi, en dehors de cette période de validité d'utilisation, la signature n'est plus reconnue et l'accès n'est donc pas autorisé. Si le chargement d'une nouvelle signature n'a pas eu lieu l'accès ne sera donc plus autorisé.

On a représenté sur la figure 1 le schéma d'un système selon l'invention. Ce système comporte des moyens d'élaboration des signatures électroniques LE. En pratique, ces moyens pourront être réalisés par un lecteur encodeur comportant un microprocesseur ou un microcontrôleur, programmé de manière à mettre en oeuvre un algorithme de production f. Il pourra s'agir par exemple d'un algorithme à clé secrète ou d'un algorithme à clé publique connu.

On peut citer à titre d'exemple comme algorithme à clé secrète l'algorithme DES (Data Encrytion Standard) et comme algorithme à clé publique l'algorithme RSA (Rivest Shamir Adleman).

Dans la suite de la description, ces algorithmes vont être représentés par une fonction f.

Le lecteur/encodeur permet en outre de charger les signatures dans les supports de mémorisation. Pour cela, on choisit un lecteur/encodeur connu et adapté au support de mémorisation choisi. On pourra prendre à titre d'exemple des lecteurs/encodeurs existants sur le marché permettant de lire et d'écrire dans une carte magnétique ou dans une carte à mémoire à contact affleurant ou un lecteur/encodeur adapté à la lecture et à l'écriture sur une clé électronique à contact affleurant ou un lecteur/encodeur adapté à la lecture et à l'écriture de cartes sans contact.

L'exemple illustré sur la figure 1 montre le schéma électronique d'un lecteur/encodeur adapté à la lecture et à l'écriture sur un support de mémorisation de type carte à mémoire.

Ce lecteur/encodeur est de type connu et comporte un microprocesseur 100 (ou microcontrôleur) avec une mémoire de programme associée 101 de type ROM ou EEPROM (électriquement effaçable) et éventuellement une mémoire de travail 103 de type RAM.

Ce lecteur/encodeur LE comporte une interface d'entrée/sortie 103 adaptée au support de mémorisation. Il comportera une antenne d'émission/réception dans le cas de support à lecture/écriture sans contact.

Il comportera des contacts adaptés aux contacts affleurants tels que ceux des cartes à puces ou des clés électroniques. Ce lecteur comporte en outre un clavier non représenté.

La mémoire non volatile 101 du lecteur/encodeur LE contient le programme de mise en oeuvre de la fonction f choisie et un programme classique de lecture et écriture sur un support de mémorisation. La clé K sera également enregistrée dans cette mémoire.

La signature calculée peut être la même pour tous les supports. Si la signature S est la signature d'une donnée DH, alors cela signifiera que cette donnée DH est la même pour tous les supports.

Les signatures calculées peuvent être différentes pour chaque support.

Les signatures S destinées à chaque support peuvent alors être calculées par avance ou au coup par coup. Dans le cas où elles sont calculées d'avance, il faut que les données DH relatives à chaque utilisation soient enregistrées dans une mémoire non volatile du lecteur/encodeur. Dans ce cas on mémorisera également une table afin de faire correspondre à chaque utilisation le couple : signature S - donnée DH qui lui est affectée.

Dans ce cas, lorsqu'un support de mémorisation est introduit dans le lecteur/encodeur par un utilisateur, l'utilisateur peut saisir son numéro d'identification sur le clavier du lecteur/encodeur et le lecteur/encodeur va aller chercher dans la table la signature S et la donnée DH qui est affectée à cette utilisation et les charger dans la mémoire du support.

Bien entendu, on pourra procéder de façon différente sans que cela change le principe de l'invention. En effet, les signatures peuvent être calculées au fur et à mesure du besoin, c'est-à-dire à chaque demande de chargement dans le support de mémorisation faite par un utilisateur. Dans ce cas, il n'est pas nécessaire de mémoriser une table contenant les différentes signatures et les différentes données relatives à chacun des utilisateurs. L'utilisateur entre lui-même la donnée DH qui lui est propre et le calcul est fait en temps réel par le lecteur/encodeur LE.

Les signatures produites peuvent être différentes parce que les clés de production choisies sont différentes. Cette différence peut être introduite par une donnée Z prédéterminée permettant de distinguer des zones d'utilisation soit géographiques, soit logiques. Il s'agira de zone logique dans le cas où il s'agirait d'autoriser des accès à certains programmes et pas d'autres dans un système informatique.

Selon l'invention, les bâtiments ou les systèmes soumis à un contrôle d'accès sont en outre équipés d'un moyen de vérification du type serrure électronique qui, dans l'application particulière qui est décrite, sera constitué d'un lecteur de type lecteur de cartes soit à contacts affleurants tels que représenté sur la figure 2, soit un lecteur à lecture sans contact, soit à lecture de pistes magnétiques, selon le support utilisé.

Ce lecteur L comporte de façon classique une unité de traitement 200 réalisée par un microprocesseur et des mémoires qui lui sont associées, une mémoire non volatile 201 et une mémoire de travail 202. Le lecteur comporte en outre une horloge interne 203. Dans la mémoire non volatile (par exemple du type ROM) se trouve programmée la fonction f de vérification de signature utilisée ainsi que la clé K utilisée pour vérifier les signatures.

Le support de mémorisation, quant à lui, comporte une mémoire non volatile 301 que l'on choisira de préférence reprogrammable électriquement (RAM sauvegardée ou EEPROM). Selon certaines applications, le support de mémorisation pourra comporter en outre une unité de traitement de type microprocesseur 300 avec une mémoire 302 associée de type ROM comportant une ou plusieurs fonctions de cryptage. Un tel support de mémorisation est schématisé sur la figure 3.

L'invention pourra être appliquée avantageusement à l'accès à des immeubles (et éventuellement aux boîtes à lettres) par les préposés au courrier.

Chaque préposé se verra alors attribuer une clé électronique lui permettant d'accéder à tous les immeubles (et éventuellement aux boîtes à lettres de ces immeubles) d'une zone donnée, à l'intérieur d'une plage horaire donnée. Pour cela, on inscrira quotidiennement dans la clé un certain nombre d'informations caractéristiques de cette zone et de cette plage.

Bien entendu, l'invention peut être utilisée par toute autre organisation qui a besoin d'un accès fréquent à des immeubles. Dans cette application, toutes les données contenues dans les serrures électroniques affiliées à une zone donnée et relatives à une organisation donnée sont identiques, et la clé électronique détenue par un membre de cette organisation fait office de passe-partout électronique.

Le préposé n'a donc aucun intérêt à dupliquer la clé électronique puisqu'elle cessera de fournir l'accès aussitôt qu'il aura dépassé la durée d'utilisation.

Dans le cas où on limite le nombre d'utilisations à l'intérieur de la période considérée, chaque signature Sj chargée sur sa carte lui donnera un droit d'accès et ne pourra pas être réutilisée. Pour cela le calcul de la signature pourra faire intervenir des paramètres prédéterminés aj, qui pourront, par exemple êtres communs à toutes les cartes. Ces paramètres seront enregistrés dans les serrures.

## Revendications

1. Système de contrôle d'accès comprenant :

   - des supports de mémorisation portables (C),
   - des moyens (LE) aptes à délivrer au moins une clé électronique et à 1' inscrire dans le support de mémorisation détenu par un utilisateur pour lui donner un droit d'accès aux ensembles que l'on cherche à protéger, cette clé comportant au moins une donnée DH correspondant à une période d'autorisation d'accès prédéterminée,
   - des moyens (L) assurant une fonction de serrure électronique aptes à délivrer un signal d'autorisation d'accès ( A )

   caractérisé en ce que la clé délivrée comporte également une signature S de la donnée DH, les moyens aptes à délivrer cette clé étant aptes à élaborer une nouvelle signature S à la demande de l'utilisateur pour chaque nouvelle période d'utilisation et à la charger dans son support de mémorisation afin de lui renouveler autant de fois que nécessaire son droit d'accès ;
   et caractérisé en ce que les moyens assurant la fonction de serrure délivrent le signal d'autorisation d'accès dans le cas où le support de mémorisation (C) comporte en mémoire la donnée DH et la signature S requise pour la période d'utilisation considérée, ces moyens étant aptes à comparer la donnée DH à la période considérée et à vérifier que la signature S est bien la signature de cette donnée DH.

2. Système de contrôle d'accès selon la revendication 1, caractérisé en ce que la donnée DH relative à une période prédéterminée de validité comporte une information de date d'utilisation et une plage horaire d'utilisation.

3. Système de contrôle d'accès selon la revendication 1 ou 2, caractérisé en ce que les moyens (L), assurant la fonction de serrure, comportent une horloge interne (203) pour pouvoir comparer la donnée mémorisée DH à la donnée temporelle temps réel H donnée par l'horloge.

4. Système de contrôle d'accès selon l'une quelconque des revendications 1 à 3, caractérisé en ce que les moyens aptes à délivrer au moins une clé (LE) comportent une unité de traitement (100) reliée à au moins une mémoire non volatile (101) dans laquelle est enregistrée la donnée DH et un algorithme f de signature de donnée de sorte que $S = f(K, DH)$, K étant une clé secrète et l'algorithme f étant un algorithme à clé secrète ou à clé publique.

5. Système de contrôle d'accès selon la revendication 4, caractérisé en ce que la clé secrète K utilisée pour élaborer les signatures pour tous les supports (C) est la même pour toutes les signatures chargées et renouvelées dans ces supports (C).

6. Système de contrôle d'accès selon les revendications 4 ou 5, caractérisé en ce que pour distinguer différentes zones géographiques ou logiques d'utilisation, on associe à la clé secrète K utilisée pour calculer la signature S d'une donnée DH, une donnée Z distincte selon les zones.

7. Système de contrôle d'accès selon la revendication 4, caractérisé en ce que l'on utilise des clés secrètes K différentes pour élaborer les signatures, une clé secrète étant choisie par zone géographique ou logique prédéterminée.

8. Système de contrôle d'accès selon les revendications 5 ou 6, caractérisé en ce que la clé secrète utilisée est une clé diversifiée $K_C$ = Div (K, C), C étant une donnée prédéterminée et Div une fonction de diversification.

9. Système de contrôle d'accès selon l'une quelconque des revendications précédentes, caractérisé en ce que la plage horaire d'utilisation déterminée DH est formée de plusieurs plages horaires consécutives DHi et en ce que les moyens délivrant les clés électroniques élaborent une signature Si pour chacune de ces plages.

10. Système de contrôle d'accès selon l'une quelconque des revendications précédentes, caractérisé en ce que plusieurs signatures Sj sont calculées et enregistrées sur les supports des utilisateurs par les moyens (LE) aptes à délivrer des clés électroniques, pour une même donnée DH, ces signatures étant obtenues à partir d'une clé secrète K, et d'une fonction de production f telle que Sj = f (K, DH, aj), aj étant des paramètres prédéterminés et enregistrés dans les serrures électroniques.

11. Système de contrôle d'accès selon l'une quelconque des revendications 1 à 3, caractérisé en ce que les moyens assurant la fonction de serrure électronique (L) comportent une unité de traitement (200) et au moins une mémoire non volatile (201) dans laquelle sont enregistrés un algorithme de vérification de signature et une clé de vérification de signature.

12. Système de contrôle d'accès selon la revendication 11, caractérisé en ce que les moyens assurant la fonction de serrure électronique (L) sont adaptés à la lecture des supports de moyens de mémorisation (C).

13. Système de contrôle d'accès selon la revendication 12, caractérisé en ce que les moyens assurant la fonction de serrure électronique sont formés d'un lecteur de carte à mémoire ou de clé électronique.

14. Système de contrôle d'accès selon la revendication 13, caractérisé en ce que le lecteur est un lecteur de cartes magnétiques, ou de carte à puce à contact affleurant, ou un lecteur de cartes à puce sans contact.

15. Système de contrôle d'accès selon l'une quelconque des revendications précédentes, caractérisé en ce que les supports de mémorisation (C) comportent une mémoire non volatile reprogrammable électriquement (RAM sauvegardée, EEPROM).

16. Système de contrôle d'accès selon la revendication 15, caractérisé en ce que les supports (C) sont réalisés, soit par des cartes à mémoire à contact affleurant, soit par des cartes à mémoire à lecture sans contact, soit par des clés électroniques, soit par des cartes magnétiques.

**Patentansprüche**

1. Zugangskontrollsystem, umfassend:

   - tragbare Speicherträger (C),
   - Einrichtungen (LE), befähigt wenigstens einen elektronischen Schlüssel zu liefern und ihn in den im Besitz eines Benutzers befindlichen Speicherträger einzuschreiben, um ihm eine Zugangsberechtigung zu den Systemen zu geben, die man zu schützen versucht, wobei dieser Schlüssel wenigstens eine Größe DH umfaßt, die einer festgelegten Zugangsberechtigungsperiode entspricht,
   - Einrichtungen (L), eine elektronische Verriegelungsfunktion sicherstellend, befähigt ein Zugangsberechtungssignal (A) zu liefern,

   **dadurch gekennzeichnet,** daß der gelieferte Schlüssel ebenfalls eine Signatur S der Größe DH umfaßt, wobei die zum Liefern dieses Schlüssels befähigten Einrichtungen fähig sind, auf Anfrage des Benutzers für jede neue Benutzungsperiode eine neue Signatur S zu erstellen und sie in seinen Speicherträger zu laden, um ihm seine Zugangsberechtigung so oft wie nötig zu erneuern;
   und dadurch gekennzeichnet, daß die die Verriegelungsfunktion sicherstellenden Einrichtungen das Zugangsberechtigungssignal in dem Fall liefern, wo der Speicherträger (C) die Größe DH und die für die betreffende Benutzungsperiode erforderliche Signatur S im Speicher enthält, wobei diese Einrichtungen fähig sind, die Größe DH mit der betreffenden Periode zu vergleichen und zu überprüfen, ob die Signatur S tatsächlich die Signatur dieser Größe DH ist.

2. Zugangskontrollsystem nach Anspruch 1, dadurch gekennzeichnet, daß die eine festgelegte Gültigkeitsperiode betreffende Größe DH eine Benutzungsdatumsinformation und einen Benutzungsstundenbereich umfaßt.

3. Zugangskontrollsystem nach Anspruch 1 oder 2, dadurch gekennzeichnet, daß die die Verriegelungsfunktion sicherstellenden Einrichtungen (L) einen internen Taktgeber (203) umfassen, um die gespeicherte Größe DH mit der durch den Taktgeber gelieferten Echzeit-Zeitgröße H vergleichen zu können.

4. Zugangskontrollsystem nach einem der Ansprüche 1 bis 3, dadurch gekennzeichnet, daß die zum Liefern wenigstens eines Schlüssels (LE) befähigten Einrichtungen eine Verarbeitungseinrichtung (100) umfassen, verbunden mit wenigstens einem nichtflüchtigen Speicher (101), in dem die Größe DH abgespeichert ist und ein Größensignaturalgorithmus f, so daß S = f (K, DH), wobei K ein Geheimschlüssel ist und der Algorithmus f ein Geheimschlüssel- oder Öffentlicher-Schlüssel-Algorithmus ist.

5. Zugangskontrollsystem nach Anspruch 4, dadurch gekennzeichnet, daß der zum Erstellen der Signaturen für alle Träger (C) benutzte Geheimschlüssel K für alle in diesen Trägern (C) geladenen und erneuerten Signaturen derselbe ist.

6. Zugangskontrollsystem nach einem der Ansprüche 4 oder 5, dadurch gekennzeichnet, daß man, um verschiedene geographische oder logische Benutzungszonen zu unterscheiden, dem zur Berechnung der Signatur S einer Größe DH benutzten Geheimschlüssel K eine je nach Zone unterschiedliche Größe Z zuordnet.

7. Zugangskontrollsystem nach Anspruch 4, dadurch gekennzeichnet, daß man verschiedene Geheimschlüssel K benutzt. um die Signaturen zu erstellen, wobei pro festgelegter geographischer oder logischer Zone ein Geheimschlüssel gewählt wird

8. Zugangskontrollsystem nach einem der Ansprüche 5 oder 6, dadurch gekennzeichnet, daß der benutzte Geheimschlüssel ein $K_C = Div (K, C)$ diversifizierter Schlüssel ist, wobei C eine festgelegte Größe und Div eine Diversifikationsfunktion ist.

9. Zugangskontrollsystem nach einem der vorangehenden Ansprüche, dadurch gekennzeichnet, daß der festgelegte Benutzungsstundenbereich DH durch mehrere aufeinanderfolgende Stundenbereiche DHi gebildet wird, und dadurch, daß die die elektronischen Schlüssel liefernden Einrichtungen für jeden dieser Bereiche eine Signatur Si erstellen.

10. Zugangskontrollsystem nach einem der vorangehenden Ansprüche, dadurch gekennzeichnet, daß mehrere Signaturen Sj berechnet und durch die zur Lieferung elektronischer Schlüssel befähigten Einrichtungen (LE) in den Trägern der Benutzer abgespeichert werden, wobei man für dieselbe Größe DH diese Signaturen aufgrund eines Geheimschlüssels K und einer Erzeugungsfunktion f erhält, z.B. Sj = f (K, DH, aj), wobei aj festgelegte und in den elektronischen Verriegelungen abgespeicherte Parameter sind.

11. Zugangskontrollsystem nach einem der Ansprüche 1 bis 3, dadurch gekennzeichnet, daß die die elektronische Verriegelungsfunktion (L) sicherstellenden Einrichtungen eine Verarbeitungseinheit (200) umfassen und wenigstens einen nichtflüchtigen Speicher (201), in dem ein Signaturüberprüfungsalgorithmus und ein Signaturüberprüfungsschlüssel abgespeichert sind.

12. Zugangskontrollsystem nach Anspruch 11, dadurch gekennzeichnet, daß die die elektronische Verriegelungsfunktion (L) sicherstellenden Einrichtungen an das Lesen der Speicherträger (C) angepaßt sind.

13. Zugangskontrollsystem nach Anspruch 12, dadurch gekennzeichnet, daß die die elektronische Verriegelungsfunktion (L) sicherstellenden Einrichtungen gebildet werden durch einen Leser für Speicherkarten oder elektronische Schlüssel.

14. Zugangskontrollsystem nach Anspruch 13, dadurch gekennzeichnet, daß der Leser ein Leser für Magnetkarten ist oder ein Leser für Chipkarten mit bündig eingelassenem Kontakt oder für Chipkarten ohne Kontakt.

15. Zugangskontrollsystem nach einem der vorangehenden Ansprüche, dadurch gekennzeichnet, daß die Speicherträger (C) einen wiederprogrammierbaren nichtflüchtigen Speicher umfassen (geschütztes bzw. gesichertes RAM, EEPROM)

16. Zugangskontrollsystem nach Anspruch 15, dadurch gekennzeichnet, daß die Träger (C) gebildet werden durch Speicherkarten mit bündig eingelassenem Kontakt oder durch Speicherkarten mit kontakt freier Lektüre oder durch elektronische Schlüssel oder durch Magnetkarten.

**Claims**

1. An access control system comprising:

   - portable memory media (C),
   - means (LE) designed to issue at least one electronic key and to write it on the memory medium held by a user in order to give him a right to access units which it is desirable to protect, this key incorporating at least one data item DH corresponding to a predetermined period of authorised access,

- means (L) for performing an electronic locking function designed to issue an access authorisation signal (A),

characterised in that the key issued also incorporates a signature S for the data item DH, the means designed to issue this key being set up to work out a new signature S at the request of the user for each new period of usage and to load it onto the memory medium so that his right of access can be renewed as many times as necessary;

and characterised in that the means running the locking function issue the access authorisation signal if the memory medium (C) has in memory the data item DH and the signature S required for the period of usage in question, these means being set up to compare the data item DH with the period in question and check that the signature S is indeed the signature for this data item DH.

2. An access control system as claimed in claim 1, characterised in that the data item DH relating to a predetermined period of validity incorporates information about the date of usage and a usage time-schedule range.

3. An access control system as claimed in any one of claims 1 or 2, characterised in that the means (L) performing the locking function has an internal clock (203) in order to be able to compare the memorised data item DH with the real time time-information H given by the clock.

4. An access control system as claimed in any one of claims 1 to 3, characterised in that the means designed to issue at least one key (LE) have a processing unit (100) linked to at least one non-volatile memory (101) for storing the data item DH and an algorithm f for the data item signature such that $S = f(K, DH)$, where K is a secret key and the algorithm f is an algorithm with a secret key or a public key.

5. An access control system as claimed in claim 4, characterised in that the secret key K used to work out the signatures for all the media (C) is the same for all the signatures loaded onto and renewed on these media (C).

6. An access control system as claimed in claims 4 or 5, characterised in that in order to distinguish between different geographical zones or usage logics, the secret key K used to calculate the signature S of a data item DH is associated with a separate data item Z depending on the zones.

7. An access control system as claimed in claim 4, characterised in that different secret keys K are used to work out the signatures, a secret key being selected by predetermined geographic zone or logic.

8. An access control system as claimed in claims 5 or 6, characterised in that the secret key used is a diversified key $K_c = \text{Div}(K, C)$, C being a predetermined data item and Div a diversification function.

9. An access control system as claimed in any one of the preceding claims, characterised in that the predetermined usage time-schedule range DH is made up of several consecutive time-schedule ranges DHi and in that the means issuing the electronic keys work out a signature Si for each of these ranges.

10. An access control system as claimed in any one of the preceding claims, characterised in that several signatures Sj are calculated and stored on the media of the users by the means (LE) designed to issue electronic keys, for a same data item DH, these signatures being obtained from a secret key K and a product function f such that $Sj = f(K, DR, aj)$, where aj are predetermined parameters stored in the electronic locks.

11. An access control system as claimed in any one of claims 1 to 3, characterised in that the means providing the electronic lock function (L) consist of a processing unit (200) and at least one non-volatile memory (201) in which a signature verification algorithm and a signature verification key are stored.

12. An access control system as claimed in claim 11, characterised in that the means performing the electronic lock function (L) are designed to read the memory media.

13. An access control system as claimed in claim 12, characterised in that the means performing the electronic lock function consist of a reader for a memory card or electronic key.

14. An access control system as claimed in claim 13, characterised in that the reader is a reader for magnetic card or chip cards with flush-mounted contact or a reader for contactless chip cards.

15. An access control system as claimed in any one of the preceding claims, characterised in that the memory media (C) have an electrically reprogrammable non-volatile memory (backup RAM, EEPROM).

16. An access control system as claimed in claim 15, characterised in that the media (C) are either memory cards with a flush contact, or contactless read-only memory cards or electronic keys or magnetic cards.

FIG_1

FIG_2

FIG_3